# EUROPEAN PATENT SPECIFICATION

(11) **EP 3 525 326 B1**
(45) Date of publication and mention of the grant of the patent: **24.06.2020**
(21) Application number: 18425005.8
(22) Date of filing: 07.02.2018
(51) Int. Cl.: H02K 13/04, H02K 15/00, H02K 13/00, H01R 39/04, H01R 39/32

(54) **IMPROVED COMMUTATOR, ROTOR COMPRISING SAID IMPROVED COMMUTATOR, ELECTRIC MOTOR COMPRISING SAID ROTOR AND METHOD FOR MANUFACTURING SAID ROTOR**
VERBESSERTER KOMMUTATOR, ROTOR MIT DEM VERBESSERTEN KOMMUTATOR, ELEKTROMOTOR MIT DEM ROTOR UND VERFAHREN ZUR HERSTELLUNG DES ROTORS
COMMUTATEUR AMÉLIORÉ, ROTOR COMPRENANT LEDIT COMMUTATEUR AMÉLIORÉ, MOTEUR ÉLECTRIQUE COMPRENANT LEDIT ROTOR ET PROCÉDÉ DE FABRICATION DUDIT ROTOR

(43) Date of publication of application: 14.08.2019
(73) Proprietor: Askoll Holding S.r.l. a socio unico, 36031 Povolaro di Dueville (VI) (IT)
(72) Inventor: Marioni, Elio, I-36031 Dueville (VI) (IT)
(74) Representative: Antonucci, Emanuele

(56) References cited:
- EP-A2- 2 892 132
- CN-A- 105 281 502
- SK-U1- 501 272 016
- US-A- 4 326 140
- US-A- 4 521 710
- US-A1- 2003 057 798

## Description

### Field of application

The present invention relates to a commutator, specifically adapted for a rotor of an electric motor. The invention also relates to said rotor, the related electric motor and a method for manufacturing said rotor.

Said electric motor is liable to multiple applications, for example it can be suitably used as an inner component of household appliances, such as washing machines, dryers or dishwashers.

### Background art

The so-called universal motors are electric motors provided with series-excited rotor and stator windings, which have the particular feature of being able to be powered both in direct current and in alternating current.

The universal motors maintain, also when supplied with alternating current, the high starting torque and the compact dimension typical of DC motors, and are therefore traditionally used in many household appliances applications.

The cost competition in the field is recently fostering the use of aluminum instead of the more valuable copper, traditionally used for the windings of the machine.

Although it is attractive in terms of cost reduction, this replacement has been hindered to date by significant technical difficulties during the production phase, in particular related to the use of an aluminum wire - whether solid or copper-clad (CCA) - for manufacturing the rotor windings.

The commutators used in the universal motors usually have a hook, consisting of a lamella end portion folded on itself, adapted to lock the free end of the winding wire. Electric connection between hook and wire is ensured by an electric discharge which, along with the folding of the hook, arranges for the enamel to be removed and - in case of copper-to-copper connection - defines a partial interpenetration between the two elements.

In presence of solid aluminum or CCA wires, which have lower ductility than copper and therefore are more subject to breakage due to traction and compression, the closure of the hook, however, often causes the incision and / or local breakage of the wire, so that production waste considerably and uneconomically increases.

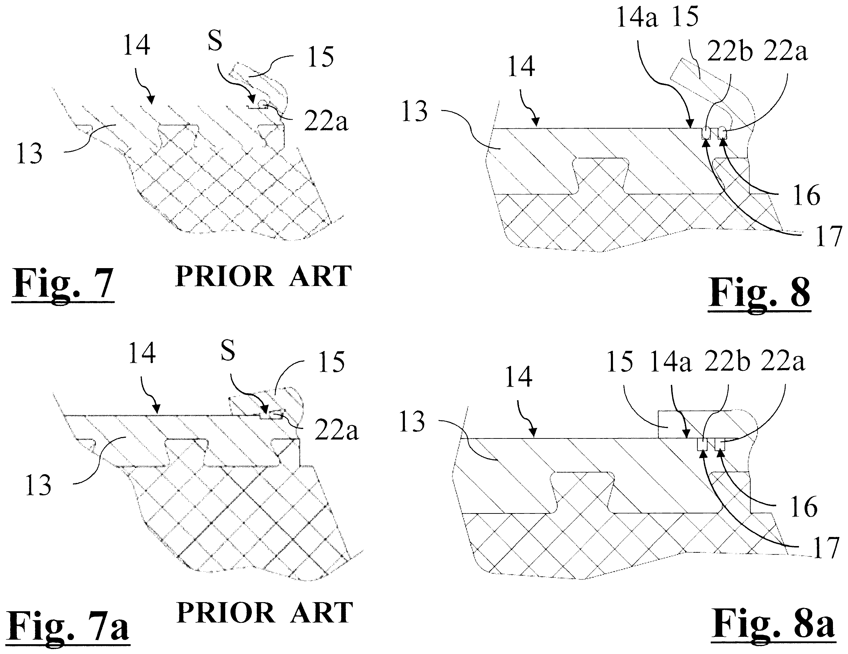

In an attempt to solve this problem, it has been recently proposed to form, by chip removal, a surface flattening at the point of attachment of the winding wires, as shown in the accompanying figures 7 and 7a. The ends of the aluminum wires 22a to be coupled to the main body 13 of the copper lamella are therefore placed on a supported flattening S of the attachment surface 14, where they are held by the folding of the flexible appendix 15 during the electric discharge forming the electric connection.

An example of such a solution is shown for instance in prior art document US 2003/0057798. A further example is shown in prior art document SK 501 272 016 U1, which forms the closest prior art for the present invention.

Such solution proposal has only partially reduced the risk of damage of the wire, and the formation of the copper/aluminum contact in the commutator remains therefore an unsolved critical issue.

Other prior art documents relating to a rotor commutator are US 4,326,140 and CN 105281502 A. However, said disclosures are not concerned with the damage/breakage of winding wires, let alone aluminum wires, during manufacturing.

The technical problem underlying the present invention is therefore to conceive a commutator with a system for connecting the winding wires which prevents damage and/or breakage episodes, although it ensures a limited contact resistance to the wire/commutator interface.

It is observed that the technical problem mentioned above, herein specifically described with reference to the universal electric motor, the research of the Applicant mainly focused on, is obviously extendible to any electric machine provided with commutator.

### Summary of the invention

The technical problem previously identified is solved by a rotor for electric motor according to claim 1.

The attachment end of the aluminum wire is recessed in the transversal groove, within which it is inserted by mechanical coupling.

Thanks to this solution, a substantial restraint of the wire is formed, which prevents, as demonstrated by the experimental results of the Applicant, cut or damage phenomena due to the subsequent steps of the manufacturing process (folding of the flexible appendix and electric discharge for removing the enamel).

The groove is shaped to receive the free end of the winding wire coupled with interference fit: indeed, it has been observed that the prevention of damage is significantly better in this case.

The groove has a depth preferably higher than half the length measured along the development direction of the respective lamella. Therefore, it has a substantially U-shaped and significantly recessed profile, which allows recessing a cylindrical product namely with circular section such as the winding wire.

Preferably, the groove has a substantially square or trapezoidal section profile, with depth approximately equal to the minimum length.

The flexible appendix can be preferably folded so as to get closer to said attachment portion coming into contact with the winding wire housed in the groove. Still preferably, the flexible appendix is adapted to press onto a portion of winding wire which remains exposed after the insertion of the wire, thus contributing to the compression of the wire itself within the volume of the groove.

Preferably, the main body of each of the lamellae has a head end with transversal width lower than the transversal width of the rest of the main body; said flexible appendix being jointed to said head end; said groove transversely crossing said head end.

Still preferably, at least one of the lamellae has at least two side-by-side grooves at said attachment portion, each of said grooves being shaped for coupling a different free end of winding wire of said rotor. It should be observed that the two side-by-side grooves are distinct, so that each winding wire independently recesses into a specific groove.

In particular, to form the recessing described above, the grooves are suitably dimensioned with respect to the winding wires.

Each groove has a length measured along the development direction lower than the diameter of the respective winding wire; preferably, said length is equal or lower than 90% of the diameter of the respective winding wire.

For example, for wires with diameter between 0,6 mm and 0,7 mm, the length of the recess can be equal to 0,4 mm.

Each groove has a depth lower than the diameter of the respective winding wire inserted therein, but higher than half of said diameter; preferably said depth is equal or lower than 90% of said diameter.

It should be observed that in particular wherein the groove is formed close to the interface with the flexible appendix, its two upper edges can be at a different distance with respect to the bottom. In particular, the edge facing towards the flexible appendix can be lowered with respect to the edge facing towards the external surface of the main body. In this way, the folding of the flexible appendix in a substantially parallel position and almost, if not entirely, in contact with the external surface is facilitated. Indeed, the flexible appendix, in a folded position, must be able to contact and exert a pressure on the winding wires mainly recessed in the grooves of the respective lamella.

In the present description, the term depth is to be considered as the distance of the bottom of the groove with respect to the edge facing towards the main body of the lamella, also in case of asymmetric groove described above.

The technical problem previously identified is also solved by an electric motor, by way of non-limiting example a universal motor comprising a rotor according to what has been previously described rotatably free within a stator body.

Said motor can be advantageously employed within large household appliances, for example it can be configured to foster rotation of the basket in a washing machine or a dryer.

The technical problem previously identified is also solved by an embodiment of a rotor according to what has been previously described. Such method comprises in particular the steps of:
forming a commutator according to what has been previously described;
for each lamella, with the respective flexible appendix in an undeformed position, inserting - preferably forcing - within the at least one groove the respective free end of the winding wire;
for each lamella, bringing said flexible appendix into a folded position so as to compress the winding wire inserted in the one or more grooves;
for each lamella, once the flexible appendix has been folded, it is electrically coupled to said winding wire by electric discharge.

The electric discharge mentioned above can occur in a known manner by applying two electrodes to the flexible appendix and to the lamella, possibly modifying the machine parameters (power, time, force) according to the use of an aluminum wire instead of the traditional copper wire.

It should be noticed that the formation of the commutator comprises a step of forming the transverse grooves on the main body of each lamella. Such step is preferably performed by operating, via a tool specifically designed for this purpose, a local compression on the lamella, rather than by chip removal.

Further features and advantages will become clearer from the following detailed description of a preferred, but not exclusive, embodiment of the present invention with reference to the attached figures that are given for instance and not limiting to it.

### Brief description of drawings

figure 1 represents a perspective view of an electric motor assembly according to the present invention, partially sectioned to show the inner commutator;

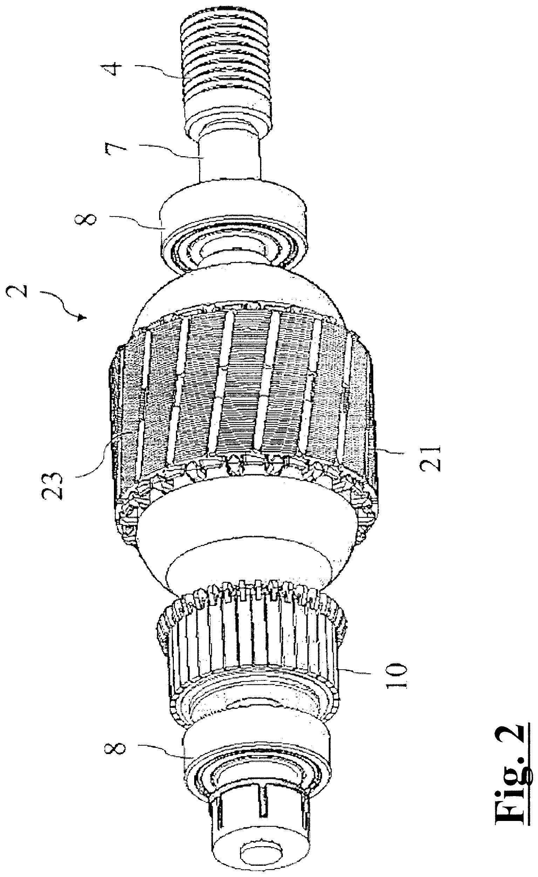

figure 2 represents a perspective view of a rotor for electric motor according to the present invention;

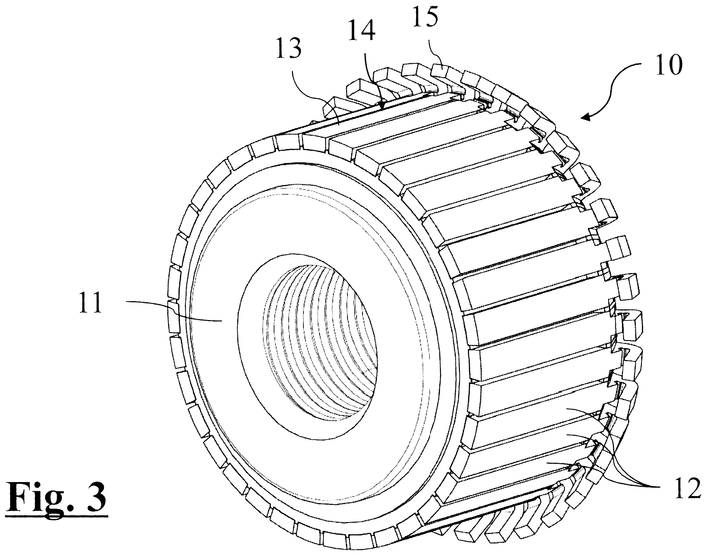

figure 3 represents a perspective view of a commutator according to the present invention, in a preliminary configuration with the connection hooks or the flexible appendices of the lamellae in open configuration;

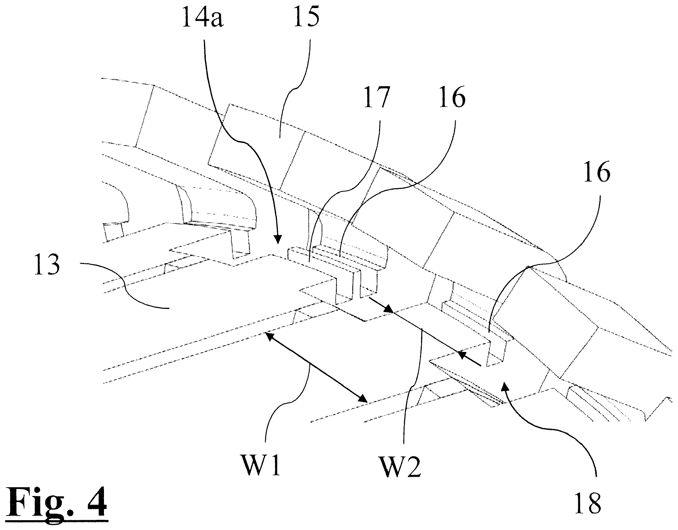

figure 4 represents an enlarged detail of the commutator of Figure 3;
figure 5 represents a diametric sectional view of a first lamella, adapted to couple with a single winding wire, of the commutator of figure 3;
figure 5a represents an enlarged detail of the view of Figure 5;
figure 6 represents a diametric sectional view of a second lamella, adapted to couple with two winding wires, of the commutator of figure 3;
figure 6a represents an enlarged detail of the view of Figure 6;
figure 7 represents a diametric sectional view of a detail of a commutator according to the prior art, in a preliminary assembly step with the winding wire in a position below the connection hook that is still not tightened;
figure 7A represents the detail of Figure 7, in a final assembly step with the connection hook tightened on the winding wire;
figure 8 represents a diametric sectional view of a detail of the device of figure 3, in a preliminary assembly step with two winding wire in a position below the connection hook that is still not tightened;
figure 8A represents the detail of Figure 8, in a final assembly step with the connection hook tightened on the winding wire;

### Detailed description

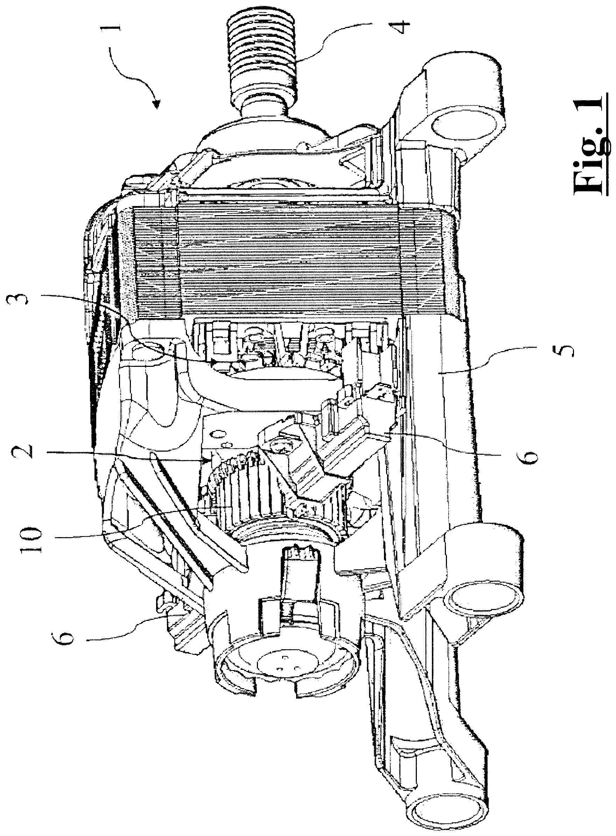

With reference to the attached figure 1, a universal motor according to the present inventionis generally identified by 1.

In the preferred embodiment illustrated herein, said transverse motor 1 is specifically adapted for use in household appliances applications, in particular to operate the rotating basket of a washing machine or similar device.

The transverse motor 1 comprises an external frame 5, comprising a plurality of feet adapted to fix the casing of the household appliance.

A stator 3 consisting of coils wound around the poles of a magnetic circuit is provided integral to the said external frame 5. Said windings are formed with solid aluminum wires, or with copper-clad aluminum wire (CCA).

Within said stator 3 a rotor 2 is rotary assembled, supported by two bearings or bushings 8 at the opposite ends of the external frame 5. One of the ends of the rotor 2, coming out of the external frame 5, has a pulley 4 for operating a belt for transmitting motion to the basket of the washing machine.

The rotor 2 has a cylindrical rotor body 21, on which a plurality of slots 23 are formed for receiving winding wires 22a; 22b. Such wires are made of aluminum, preferably solid aluminum to enable a reduction in costs as high as possible, or alternatively of copper-clad aluminum.

Laterally to the external frame 5 two brushes 6 are fixed, which are adapted to allow the rotor 2 to be powered by means of a sliding electric connection above a commutator 10.

The commutator 10 is keyed over a shaft 7 of the rotor 2, and in particular comprises a rotating support 11, preferably dielectric, which supports a plurality of lamellae 12, which are juxtaposed but disjointed and electrically separated from each other.

Said lamellae 12, preferably made of copper, have a main body 13 developing lengthwise in a direction parallel to the axis of the shaft 7. Said main body 13 is jointly associated with the underlying rotating support 11 by means of dovetail couplings. An external surface 14 of said main body 13 forms the sliding electric connection with the brushes 6 during the operation of the universal motor 1.

The end of said lamellae 12 facing towards the rotor winding has a head end 18 with a transverse width W2 lower than the transverse width W1 of the rest of the main body 13. At the end of said head end 18 a flexible hook-shaped appendix 15 develops, whose function - as will become clearer from the following description - is that of forming the electric connection between the lamella 12 and one or more free ends of the winding wire 22a; 22b of the rotor 2.

As shown in Figures 8, 8A, such flexible appendix 15, formed as an enbloc with the main body 13, namely also made of copper, is elastically deformable between an open starting position, in which it remains far away from the external surface 14, and a closed final position, in which it gets close to the external surface 14, in particular to an end portion of such surface, hereinafter identified as abutment portion 14a.

There are two types of lamellae 12 of the commutator 10: the greater part is adapted to couple with a single winding wire 22a, whereas at least one lamella is adapted to couple with two different winding wires 22a; 22b.

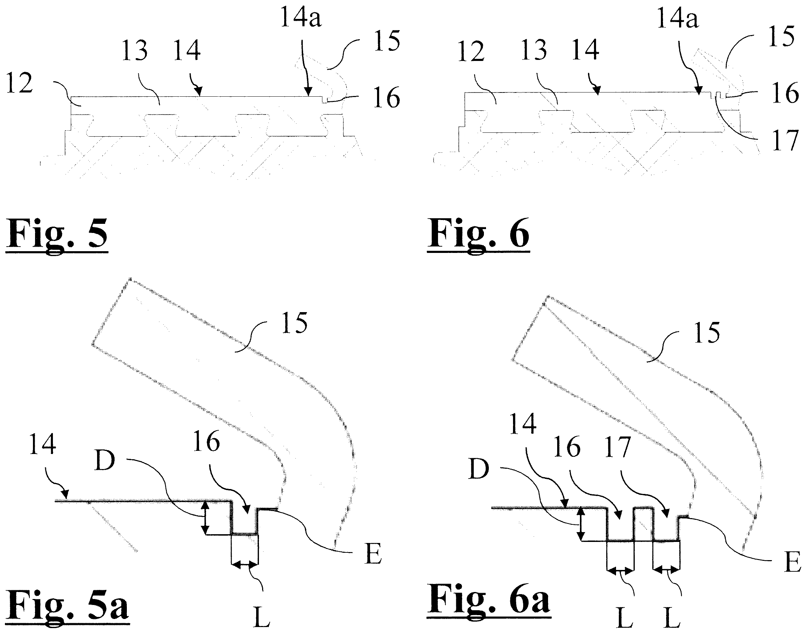

The lamellae of the first type, illustrated by way of example in Figures 5 and 5a, have a groove 16 intended to receive the winding wire 22a, transversely formed on the head end 18 at the interface with the flexible appendix 15. The lamella adapted instead for the connection with two wires, illustrated by way of example in Figures 6 and 6a, has instead two grooves 16; 17 intended to receive the two winding wires 22a; 22b: a first groove 16 at the interface with the flexible appendix 15; and a second groove 17, separated from the first one, formed in a position further away with respect to the flexible appendix 15.

The groove 16 close to the flexible appendix 15 has, in both types of lamella 12, an asymmetric U-shaped profile which connects the external surface 14 from one side to an edge E on the other side, slightly lowered with respect to the level of the external surface 14. The lowered edge E, contiguous to the pivot point of the flexible appendix 15, facilitates its collapse in a position parallel and juxtaposed to the external surface 14.

The throats 16; 17, net of the lowered edge, have profiles with a substantially square section of equal size. Said profiles are configured to allow the coupling with interference fit of the winding wires 22a; 22b, that is they have lower dimension than the diameter of the wire they receive. Preferably, the dimension in depth D and length L (the latter measured along the development direction of the lamella 12) are both between 55% and 90% of the diameter of the wire they receive.

By way of example, considering a first winding wire 22a with a diameter equal to 0.6 mm and a second winding wire 22b with a diameter equal to 0.67 mm, the grooves 16; 17 can have a sideway square section profile of 0.4 mm.

It is observed that the grooves 16; 17 mentioned above, which are difficult to form by chip removal, are preferably formed via a dedicated tool which works on the lamella 12 by compression, locally caving it.

During the assembly of the rotor 2, the free ends of the winding wires 22a; 22b are forcedly inserted, with methods similar to those of the insertion of the winding wires into the rotor or stator slots, within the respective grooves 16; 17 of the commutator 10. Given the dimensional difference, the end of the wire locally deforms inside the groove 16; 17, adapting its own section and coming in contact with the walls of the groove itself.

The subsequent folding of the flexible appendix 15 defines a further compression of the winding wire 22a; 22b, which is thus confined within the volume defined by the groove 16; 17 and by the flexible appendix 15 which overlooks it.

Subsequently, according to known methods, an electric discharge is formed with electrodes placed in contact with the lamella 12 and the flexible appendix 15, removing the coating of the wire and forming a mechanical and electric coupling between the winding wire 16; 17 and the lamella 12 of the commutator 10.

As can be seen from the comparison between Figures 7, 7A and Figures 8, 8A, the commutators according to the prior art do not have a wire insertion groove; the compression performed by the flexible appendix 15 involves therefore most of the wire body, transmitting a strong and localized stress which can cause the breakage of the element.

In the commutator according to the invention, the groove 16; 17 allows, on the other hand, the deformation of the wire itself to be contained within a channel, avoiding the breakage or local damage thereof.

The interface between the aluminum wire 22a; 22b and the copper lamella 12, at the flexible appendix 15, defines a galvanic torque which can cause corrosion phenomena over time, with consequent oxidation of the contacts and loss of electric continuity. In order to prevent said corrosion phenomena, the rotor 2 provides a protective coating, in particular at the commutator 10 above the flexible appendices 15 which block the wires 22a; 22b.

Obviously, a skilled person, with the purpose of meeting contiguous and specific needs, may apply to the above-mentioned invention numerous changes and variants, all however within the scope of protection of the invention defined by the following claims.

## Claims

1. Rotor (2) for electric motor (1) comprising: a shaft (7); a commutator (10) comprising: a rotating support (11) and a plurality of lamellae (12) made of conductive material, mutually insulated and arranged around an external periphery of said rotating support (11); each of said lamellae (12) comprising: a main body (13) defining an external surface (14) adapted to form a temporary electric connection with a brush of said electric motor (1); and a hook-shaped flexible appendix (15), which can be folded over an attachment portion (14a) of the contact surface (14), said attachment portion (14a) having at least one groove (16; 17) transverse to the respective lamella (12) and configured to intimately receive the free end of a winding wire (22a; 22b) of said rotor (2); wherein said lamellae (12) are made of copper; said rotating support (11) being rigidly constrained to said shaft (7); the rotor (2) further comprising a rotor winding also integral to said shaft (7); free ends of winding wires (22a; 22b) of said rotor winding being coupled within the grooves (16; 17) of the lamellae (12) of said commutator (10), said flexible appendices (15) being folded over said winding wires (22a; 22b); said winding wires (22a; 22b) being at least internally made of aluminum; **characterized in that** said groove (16; 17) is configured to receive the free end of the winding wire (22a; 22b) coupled with interference fit; **in that** said groove (16, 17) has a length (L) which, measured a direction parallel to the axis of the shaft (7) along the development direction of the lamella (12), is lower than the diameter of the respective winding wire (22a; 22b); and **in that** said groove (16; 17) has a depth (D) lower than the diameter of the respective winding wire (22a; 22b) inserted therein, but higher than half the said diameter.

2. Rotor (2) according to claim 1, wherein said groove (16; 17) has a depth (D) higher than half the length (L) measured along the development direction of the respective lamella (12).

3. Rotor (2) according to one of the previous claims, wherein the main body (13) of each of said lamellae (12) has a head end (18) with transversal width (W2) lower than the transversal width (W1) of the rest of the main body (13); said flexible appendix (15) being jointed to said head end (18); said groove (16; 17) transversely crossing said head end (18).

4. Rotor (2) according to one of the previous claims, wherein at least one of said lamellae (12) has at least two grooves (16;17) side by side at said attachment portion (14a), each of said grooves being shaped for coupling with a different free end of winding wire (22a; 22b) of said rotor (2).

5. Rotor (2) according to one of the previous claims, wherein the length (L), measured along the development direction of the lamella (12), is equal or lower than 90% of the diameter of the respective winding wire (22a; 22b).

6. Rotor (2) according to one of the previous claims, wherein said depth (D) is equal or lower than 90% of said diameter of the respective winding wire (22a; 22b).

7. Rotor (2) according to one of the previous claims, wherein for each lamella (12) at least one groove (16), placed close to the interface with the flexible appendix (15), has an edge (E) facing towards said flexible appendix (15) lowered with respect to the external surface (14) to which the profile of the groove (16) connects on the opposite side.

8. Electric motor (1) comprising a rotor (2) according to one of claims 1-7, said rotor (2) being rotary free within a stator body (3).

9. Method of forming a rotor (2) according to any one of claims 1-7, said method comprising the steps of:
forming the commutator (10);
for each lamella (12), with the respective flexible appendix (15) in undeformed position, inserting within the at least one groove (16, 17) the respective free end of the winding wire (22a; 22b);
for each lamella (12), bringing said flexible appendix (15) into a folded position so as to compress the winding wire (22a; 22b) inserted in the one or more grooves (16; 17);
for each lamella (12), once the flexible appendix (15) has been folded, electrically coupling it to said winding wire (22a, 22b) by electric discharge.

## Patentansprüche

1. Rotor (2) für einen Elektromotor (1) umfassend: eine Welle (7); einen Kommutator (10) umfassend: einen rotierenden Träger (11) und eine Vielzahl von Lamellen (12) aus leitendem Material, die gegenseitig isoliert und um einen Außenumfang des rotierenden Trägers (11) herum angeordnet sind; wobei jede der Lamellen (12) umfasst: einen Hauptkörper (13), der eine Außenfläche (14) definiert, die ausgebildet ist, um eine zeitweilige elektrische Verbindung mit einer Bürste des Elektromotors (1) zu bilden; und einen hakenförmigen flexiblen Ansatz (15), der über einen Befestigungsabschnitt (14a) der Kontaktfläche (14) gefaltet werden kann, wobei der Befestigungsabschnitt (14a) mindestens eine Nut (16; 17) transversal zu der jeweiligen Lamelle (12) aufweist, die ausgebildet ist, um das freie Ende eines Wicklungsdrahtes (22a; 22b) des Rotors (2) eng anliegend aufzunehmen; wobei die Lamellen (12) aus Kupfer hergestellt sind; wobei der rotierende Träger (11) starr an der Welle (7) befestigt ist; wobei der Rotor (2) weiterhin eine Rotorwicklung, die Teil der Welle (7) ist; wobei die freien Enden der Wicklungsdrähte (22a; 22b) der Rotorwicklung mit den Nuten (16; 17) der Lamellen (12) des Kommutators (10) gekoppelt sind, wobei die flexiblen Ansätze (15) über die Wicklungsdrähte (22a; 22b) gefaltet sind; wobei die Wicklungsdrähte (22a; 22b) zumindest innen aus Aluminium hergestellt sind; **dadurch gekennzeichnet, dass** die Nut (16; 17) zur Aufnahme des freien Endes des mit Presspassung gekoppelten Wicklungsdrahtes (22a; 22b) ausgebildet ist; dass die Nut (16; 17) eine Länge (L) aufweist, die, gemessen in einer Richtung parallel zur Achse der Welle (7) entlang der Entwicklungsrichtung der Lamelle (12), geringer ist als der Durchmesser des jeweiligen darin eingeführten Wickeldrahtes (22a; 22b), aber höher als die Hälfte des jeweiligen Durchmessers.

2. Rotor (2) nach Anspruch 1, wobei die Nut (16; 17) eine Tiefe (D) aufweist, die größer als die Hälfte der Länge (L), gemessen entlang der Entwicklungsrichtung der jeweiligen Lamelle (12), ist.

3. Rotor (2) nach einem der vorstehenden Ansprüche, wobei der Hauptkörper (13) jeder der Lamellen (12) ein Kopfende (18) mit einer transversalen Breite (W2) aufweist, die geringer ist als die transversale Breite (W1) des restlichen Hauptkörpers (13); wobei der flexible Ansatz (15) mit dem Kopfende (18) verbunden ist; wobei die Nut (16; 17) das Kopfende (18) transversal kreuzt.

4. Rotor (2) nach einem der vorstehenden Ansprüche, wobei mindestens eine der Lamellen (12) mindestens zwei Nuten (16; 17) nebeneinander an dem Befestigungsabschnitt (14a) aufweist, wobei jede der Nuten zur Kopplung mit einem unterschiedlichen freien Ende des Wickeldrahtes (22a; 22b) des Rotors (2) geformt ist.

5. Rotor (2) nach einem der vorstehenden Ansprüche, wobei die Länge (L), gemessen entlang der Entwicklungsrichtung der Lamelle (12), gleich oder kleiner ist als 90 % des Durchmessers des jeweiligen Wickeldrahtes (22a; 22b).

6. Rotor (2) nach einem der vorstehenden Ansprüche, wobei die Tiefe (D) gleich oder kleiner als 90% des Durchmessers des jeweiligen Wickeldrahtes (22a; 22b) ist.

7. Rotor (2) nach einem der vorstehenden Ansprüche, wobei für jede Lamelle (12) mindestens eine Nut (16), die nahe der Schnittstelle mit dem flexiblen Fortsatz (15) angeordnet ist, eine Kante (E) aufweist, die dem flexiblen Ansatz (15) zugewandt ist und in Bezug auf die Außenfläche (14), an die das Profil der Nut (16) auf der gegenüberliegenden Seite anschließt, abgesenkt ist.

8. Elektromotor (1) mit einem Rotor (2) nach einem der Ansprüche 1-7, wobei der Rotor (2) innerhalb eines Statorkörpers (3) frei drehbar ist.

9. Verfahren zur Herstellung eines Rotors (2) nach einem der Ansprüche 1-7, wobei das Verfahren die folgenden Schritte umfasst:
Ausbilden des Kommutators (10);
Einführen des jeweiligen freien Endes des Wicklungsdrahtes (22a; 22b) in die mindestens eine Nut (16, 17) für jede Lamelle (12), wobei sich der jeweilige flexible Ansatz (15) in unverformter Position befindet;
für jede Lamelle (12) den flexiblen Ansatz (15) in eine gefaltete Position zu bringen, um so den in die eine oder mehrere Nuten (16; 17) eingeführten Wickeldraht (22a; 22b) zusammenzudrücken;
für jede Lamelle (12), sobald der flexible Fortsatz (15) gefaltet wurde, elektrisches Koppeln desselben an den Wickeldraht (22a, 22b) durch elektrische Entladung.

## Revendications

1. Rotor (2) pour moteur électrique (1) comprenant : un arbre (7) ; un collecteur (10) comprenant : un support rotatif (11) et une pluralité de lamelles (12) réalisées dans un matériau conducteur, isolées les unes des autres et disposées autour d'une périphérie externe dudit support rotatif (11) ; chacune desdites lamelles (12) comprenant : un corps principal (13) définissant une surface externe (14) apte à réaliser une connexion électrique temporaire avec un balai dudit moteur électrique (1) ; et un appendice flexible en forme de crochet (15), qui peut être replié sur une partie de fixation (14a) de la surface de contact (14), ladite partie de fixation (14a) ayant au moins une rainure (16 ; 17) transversale à la lamelle (12) respective et configurée pour recevoir étroitement l'extrémité libre d'un fil de bobinage (22a ; 22b) dudit rotor (2) ; lesdites lamelles (12) étant réalisées en cuivre ; ledit support rotatif (11) étant maintenu rigidement sur ledit arbre (7) ; le rotor (2) comprenant en outre un bobinage de rotor également solidaire dudit arbre (7) ; des extrémités libres de fils de bobinage (22a ; 22b) dudit bobinage de rotor étant couplées dans les rainures (16 ; 17) des lamelles (12) dudit collecteur (10), lesdits appendices flexibles (15) étant repliés sur lesdits fils de bobinage (22a ; 22b) ; lesdits fils de bobinage (22a ; 22b) étant réalisés, au moins à l'intérieur, en aluminium ; **caractérisé en ce que** ladite rainure (16 ; 17) est configurée pour recevoir l'extrémité libre du fil de bobinage (22a ; 22b) couplé avec un ajustement serré ; **en ce que** ladite rainure (16, 17) a une longueur (L) qui, mesurée dans une direction parallèle à l'axe de l'arbre (7) le long de la direction de développement de la lamelle (12), est inférieure au diamètre du fil de bobinage (22a ; 22b) respectif ; et **en ce que** ladite rainure (16 ; 17) a une profondeur (D) inférieure au diamètre du fil de bobinage (22a ; 22b) respectif inséré dedans, mais supérieure à la moitié dudit diamètre.

2. Rotor (2) selon la revendication 1, dans lequel ladite rainure (16 ; 17) a une profondeur (D) supérieure à la moitié de la longueur (L) mesurée le long de la direction de développement de la lamelle (12) respective.

3. Rotor (2) selon l'une des revendications précédentes, dans lequel le corps principal (13) de chacune desdites lamelles (12) a une extrémité frontale (18) présentant une largeur transversale (W2) inférieure à la largeur transversale (W1) du reste du corps principal (13) ; ledit appendice flexible (15) étant joint à ladite extrémité frontale (18) ; ladite rainure (16 ; 17) traversant transversalement ladite extrémité frontale (18).

4. Rotor (2) selon l'une des revendications précédentes, dans lequel au moins l'une desdites lamelles (12) a au moins deux rainures (16 ; 17) côte à côte au niveau de ladite partie de fixation (14a), chacune desdites rainures étant formée pour se coupler avec une extrémité libre différente du fil de bobinage (22a ; 22b) dudit rotor (2).

5. Rotor (2) selon l'une des revendications précédentes, dans lequel la longueur (L), mesurée le long de la direction de développement de la lamelle (12), est égale ou inférieure à 90 % du diamètre du fil de bobinage (22a ; 22b) respectif.

6. Rotor (2) selon l'une des revendications précédentes, dans lequel ladite profondeur (D) est égale ou inférieure à 90 % dudit diamètre du fil de bobinage (22a ; 22b) respectif.

7. Rotor (2) selon l'une des revendications précédentes, dans lequel pour chaque lamelle (12), au moins une rainure (16), placée près de l'interface avec l'appendice flexible (15), a un bord (E) faisant face audit appendice flexible (15) qui est abaissé par rapport à la surface externe (14) à laquelle le profil de la rainure (16) est connecté sur le côté opposé.

8. Moteur électrique (1) comprenant un rotor (2) selon l'une des revendications 1 à 7, ledit rotor (2) étant libre en rotation à l'intérieur d'un corps de stator (3).

9. Procédé de formation d'un rotor (2) selon l'une quelconque des revendications 1 à 7, ledit procédé comprenant les étapes consistant à
- former le collecteur (10) ;
- pour chaque lamelle (12), avec l'appendice flexible (15) respectif en position non déformée, insérer dans la au moins une rainure (16, 17) l'extrémité libre respective du fil de bobinage (22a ; 22b) ;
- pour chaque lamelle (12), amener ledit appendice flexible (15) dans une position repliée de manière à comprimer le fil de bobinage (22a ; 22b) inséré dans la ou les rainures (16 ; 17) ;
- pour chaque lamelle (12), une fois que l'appendice flexible (15) a été replié, la coupler électriquement audit fil de bobinage (22a, 22b) par décharge électrique.
